Europäisches Patentamt

European Patent Office

Office européen des brevets

(11) Veröffentlichungsnummer: **0 304 588 B1**

(12) # EUROPÄISCHE PATENTSCHRIFT

(45) Veröffentlichungstag der Patentschrift: **29.01.92**

(51) Int. Cl.⁵: **C04B** 18/08, C04B 28/18

(21) Anmeldenummer: **88110755.1**

(22) Anmeldetag: **06.07.88**

(54) Verfahren zur Herstellung wärmedämmender Voll-und Lochsteine aus Wirbelschichtrückständen.

(30) Priorität: **26.08.87 DE 3728464**

(43) Veröffentlichungstag der Anmeldung:
**01.03.89 Patentblatt 89/09**

(45) Bekanntmachung des Hinweises auf die Patenterteilung:
**29.01.92 Patentblatt 92/05**

(84) Benannte Vertragsstaaten:
**BE DE FR GB IT LU NL SE**

(56) Entgegenhaltungen:
**EP-A- 0 222 457**
**DE-A- 3 321 899**
**US-A- 4 250 134**

(73) Patentinhaber: **Bergwerksverband GmbH**
**Franz-Fischer-Weg 61**
**W-4300 Essen 13(DE)**

Patentinhaber: **Ackermann, Manfred F.,**
**Dipl.-Ing.**
**Heidestrasse 49**
**W-4630 Bochum 6(DE)**

(72) Erfinder: **Ackermann, Manfred**
**Heide Strasse 49**
**W-4630 Bochum(DE)**
Erfinder: **Leininger, Dieter, Dr.-Ing.**
**Waldeck 16**
**W-4300 Essen 1(DE)**

(74) Vertreter: **Schulte, Jörg, Dipl.-Ing.**
**Hauptstrasse 2**
**W-4300 Essen-Kettwig(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung wärmedämmender Voll- und Lochsteine niedriger Rohdichte aus Rückständen von Wirbelschichtfeuerungsanlagen, die mit ballasthaltigen Steinkohlen betrieben werden, wobei die Wirbelschichtfilterasche mit Kesselasche und Kalkhydrat unter Wasserzugabe gemischt und dann zu Steinen geformt und gepreßt wird, um dann gehärtet zu werden.

Die Nutzungsmöglichkeiten von Wirbelschichtaschen, speziell der Filteraschen, ist begrenzt und wirft erhebliche Probleme auf, weil diese Aschen infolge der spezifischen Art der Schwefeleinbindung und durch die Reaktionsprodukte des Entschwefelungsverfahrens sowie durch Restmengen an unverbrauchtem entsäuerten Kalk belastet sind. Es hat sich herausgestellt, daß das Material eine erhebliche Längendehnung bzw. Volumenzunahme erfährt, die zwischen 14,7 und 17,1 % bei Quellversuchen ohne Auflast beträgt. Diese erhebliche Ausdehnung tritt erst nach einer Ruhezeit von mehr als 2 bis 4 Stunden auf. Eine weitere erhebliche Einschränkung der Verwendungsfähigkeit liegt in der Feinkörnigkeit der Filterasche, weil rund 70 % dieses Rückstandes eine Körnung aufweist, die < 63 $\mu$ ist.

Es ist bereits vorgeschlagen worden, die Wirbelschichtfilteraschen zur Herstellung von zementgebundenen Voll- o.ä. Steinen zu verwenden (US-PS 4 344 796). Es hat sich jedoch herausgestellt, daß das Material wegen des Anhydritanteils, der bei Wasserzutritt durch den Restkalk aktiviert wird, für eine Verarbeitung mit Zement in üblichen Mörtel- und Betonmischungen, insbesondere wegen der Veränderung der Abbindezeiten, erhebliche Probleme aufwirft. Außerdem läßt sich das Material nicht einwandfrei formen und härten. Die daraus gefertigten Steine entsprechen nicht den Normen.

Bei Herstellungsversuchen nach dem bekannten Kalksandverfahren traten infolge der spezifischen Stoffeigenschaften Probleme beim Formen der Steine auf, die durch Fehlstellen in den verpreßten Rohlingen und durch Rissebildung vor dem Härteprozeß gekennzeichnet sind. Die Fehlstellen sind in erster Linie darauf zurückzuführen, daß das Material wegen der Kornfeinheit nicht rieselfähig ist und daher nicht werkzeugfüllend eingebracht werden kann, andererseits führt die Feinkörnigkeit zu Behinderung der Entlüftung des Preßmaterials.

Es galt somit, die geschilderten Probleme zu beheben. Der Erfindung liegt daher die Aufgabe zugrunde, bei Verwendung feinstkörniger Filterasche aus Wirbelschichtfeuerungsanlagen im Herstellungsprozeß dampfgehärteter Steine einen höchstmöglichen Anteil an Wirbelschichtrückständen zu verarbeiten und dabei einwandfreie Steine zu erzeugen.

Die Aufgabe wird erfindungsgemäß dadurch gelöst, daß die Wirbelschichtfilterasche < 1 mm zur Verhinderung des Einschlusses von komprimierter Luft beim nachfolgenden Pressen mit Grobsand der Bett- und Kesselasche 1,0 bis 5 mm aus diesen Wirbelschichtanlagen oder gleichdichter Mineralstoffe gleichen Kornbandes, unter Zugabe von Kalkhydrat unter Einbeziehung des aktiven Kalkgehaltes der Aschen auf einen Gesamtbinde- bzw. Reaktionsmittelanteil von ca. 10 Gew.-% gebracht und bei Einstellung einer Feuchte von 11 bis 14 % gemischt, vergleichmäßigt und dann unter Entlüftung des Gemisches zu Voll- und/oder Lochsteinen oder Wandbausteinen verdichtet und anschließend bei ca. 180°C über einen Zeitraum von 4 Stunden gehärtet wird, wobei die Aufheizung des Druckkessels über 2 Stunden erstreckt und der Druckabbau ebenfalls auf 2 Stunden ausgedehnt wird.

Überraschend hat sich herausgestellt, daß bei Einhaltung eines solchen Vorbereitungs- und Behandlungsverfahrens Steine erzeugt werden können, die ausreichende Festigkeiten und zugleich vorteilhafte Steinrohdichten besitzen. Vor allem ist es möglich, mit diesem erfindungsgemäßen Verfahren erhebliche Mengen der anhydrit- und kalkhaltigen Wirbelschichtrückständen, die bisher ausschließlich auf Sondermülldeponien verbracht werden mußten, zu verarbeiten, wobei der sonst störende Kalkanteil (bis zu 6 Gew.-%) vorteilhaft für den Prozeß verwendet wird. Durch die Zumischung des größeren Materials, d.h. des Grobsandes, wird die Rißbildung verhindert, weil eine Kompression der in der Mischung enthaltenen Luft durch den veränderten Aufbau der Mischungskörnung vermieden wird. Trotz der geringen Menge an zusätzlichem Kalk gelingt es, mittels gezielter Einstellung der Feuchte auf einen Wert zwischen 10 und 15 % bei gleichzeitiger Verringerung der Preßgeschwindigkeit Voll-, Loch- oder Wandbausteine zu erzeugen, die nach dem Verdichtungsvorgang gut zu entformen und wirkungsvoll zu härten sind. Die vorteilhaften Endwerte der Festigkeit bei deutlicher Gewichtseinsparung (bis zu 25 Gew.-% bezogen auf gleichformatige Steine aus Natursand) haben überraschend bewiesen, daß feinstkörniges, zu Quellvorgängen neigendes Rückstandsmaterial bei angepaßter Behandlung Ausgangsstoff für verbesserte Bau- bzw. Bauzuschlagstoffe sein kann.

Es hat sich herausgestellt, daß optimale Verfahrensbedingungen gegeben sind, wenn bei Vollsteinen mit gewünschter Druckfestigkeit über 12 N/mm$^2$ die Trockenmischung aus 60 bis 70 Gew.-% Wirbelschichtfilterasche und 30 bis 40 Gew.-% Grobsand hergestellt wird, der anschließend der an 10 Gew.-% fehlende aktive Kalk in Form von CaO oder Ca(OH)$_2$ zugefügt und auf 12,5 % Feuchte eingestellt wird. Bei

2

Einhaltung dieser Verfahrensbedingungen bilden sich auch bei den Vollsteinformaten 2 DF und 3 DF, formstabile Erzeugnisse, bei denen nach dem Verdichten keine haarförmigen Entlastungsrisse auftreten. Die so erzeugten Steinserien weisen eine mittlere Steinrohdichte von 1,3 bis 1,4 kg/dm$^3$ bei einer mittleren Druckfestigkeit von ca. 12 N/mm$^2$ auf.

Durch schonenden Druckaufbau der Sattdampfbedingungen im Autoklaven ist eine optimal gehärtete Produktion möglich, die die geforderten bauphysikalischen Bedingungen einwandfrei erfüllt. Ergänzend ist erfindungsgemäß vorgesehen, daß der Druckaufbau beim Härten zwischen 110 und 150 bar eingestellt wird. Die so hergestellten Steine erfüllen vorteilhaft die an derartige Produkte gestellten Bedingungen.

Bei der Herstellung von 2 DF- und 3 DF-Lochsteinen kann, wegen der durch die Lochung gegebenen besseren Entlüftung, der Preßvorgang unter nur geringfügig reduzierten Preßgeschwindigkeiten durchgeführt werden. Eine optimale Auslastung der Maschinenkapazität, die durch die Preßgeschwindigkeit ja im wesentlichen beeinflußt wird, ist gegeben, wenn Wirbelschichtfilteraschen < 1 mm und Grobsand in Form der Bett - asche aus Wirbelschichtanlagen oder Kraftwerkskesselasche im Kornband 1 bis 5 mm im Verhältnis 3 : 2 an der Trockenmischung beteiligt werden. Es hat sich gezeigt, daß auch Kombinationen von Kraftwerkskesselasche und Bettasche der Wirbelschicht miteinander möglich sind, so daß bei einer unausgeglichenen Entsorgungsbillanz die gefundenen Körnungsverhältnisse aus Rückstand anderer Steinkohlenverbrennungsanlagen vorteilhaft Verwendung finden können. Dementsprechend ist vorgesehen, daß der Anteil des Grobsandes der Bett- und Kesselasche ganz oder teilweise durch Kraftwerksasche der Körnung 1 bis 5 mm ersetzt wird.

Wird der Aufbau höherer Preßdrücke gewünscht bzw. soll eine höhere Dichte des Steinmaterials erreicht werden, wird erfindungsgemäß vorgesehen, insbesondere bei Formaten bis 3 DF den Anteil Grobsand der Bett- und Kesselasche durch Natursand 1,0 bis 2 mm ganz oder teilweise zu ersetzen.

Steht die Erzielung einer geringen Steinrohdichte im Vordergrund, ist die Verwendung von Natursand wegen der höheren Schüttdichte unzweckmäßig und sollte zu Gunsten der Verwendung von Bettasche aus Wirbelschichtfeuerungsanlagen oder deren Ersatzstoff entfallen. Bei Steinformaten, die den Abmessungen 10 oder 12 DF entsprechen oder bei großformatigen Wandbauteilen empfiehlt es sich, schon aus Gründen der Entlüftung aber auch aus Gründen der Gewichtseinsparung, ausschließlich Grobsand aus Verbrennungsrückständen in der Körnung 1 bis 5 mm zu verwenden.

Bei den großformatigen Steinen stellt das Entlüftungsproblem besondere Anforderungen. Neben der Vergröberung des Preßgutes hat es sich dabei als wirkungsvoll erwiesen, die Preßgeschwindigkeit so weit herabzusetzen, daß die in der Mischung enthaltene Luft vor Erreichen des höchsten Stempeldruckes entweichen kann. Vorteilhaft ist eine Preßgeschwindigkeit, bei der die Hubgeschwindigkeit von 8,5 auf bis zu 15 sec/Hub angepaßt wird. Dabei richtet sich selbstverständlich das Maß der Preßgeschwindigkeit nach der Größe der zu erzeugenden Steine. Dementsprechend ist erfindungsgemäß vorgesehen, daß die Preßgeschwindigkeit mit zunehmender Vergröberung des Zuschlages gesteigert wird. Andererseits ist die Preßgeschwindigkeit naturgemäß bei großen Steinen bzw. großen Abmessungen geringer als bei kleineren Voll- oder auch Lochsteinen. Damit ist dem Fachmann eine Lehre an die Hand gegeben, wie er jeweils den Gegebenheiten entsprechend vorgehen muß, um optimale Produkte zu erhalten. Wie bereits beschrieben, besteht die Möglichkeit zur Herstellung von großformatigen Wandbausteinen nach dem erfindungsgemäßen Verfahren auch darin, daß die Wirbelschichtfilterasche mit zwei Anteilen und der Grobsand mit drei Anteilen in die Trockenmischung eingeht. Hierdurch ist eine weitere Verbesserung des Körnungsaufbaues erreicht, wodurch die Preßgeschwindigkeit auf 10 sec/Hub zu Lasten des Entsorgungsanliegens gesteigert werden kann. Insgesamt können Anforderungen der Festigkeitsklasse 12 eingestellt werden, so daß diese Wandbausteine auch bei hohen Qualitätsanforderungen eingesetzt werden können.

Die Erfindung zeichnet sich insbesondere dadurch aus, daß ein Verfahren geschaffen ist, mit dem wärmedämmende, dampfgehärtete Formsteine erzeugt werden können, die gegenüber den bisher üblichen Steinen ein geringeres Gewicht aufweisen, also einfacher und besser zu handhaben sind als gleichgroße Steine in herkömmlicher Mischung. Die großen Formate, d.h Wandbausteine ab 50 cm Steinlänge bei einer Steinhöhe von 23,8 cm für eine 17,5er Wand müssen bereits mit Versetzhilfen, im allgemeinen mittels Handkran, verarbeitet werden, weil sie das zulässige Einzelgewicht von 24 kg um bis zu 20 % überschreiten. Die verfahrensgemäß hergestellten Steine gleicher Größe wiegen nur 21,0 kg und weisen eine Steinrohdichte von 0,99 bzw. 1,0 kg/dm$^3$ auf.

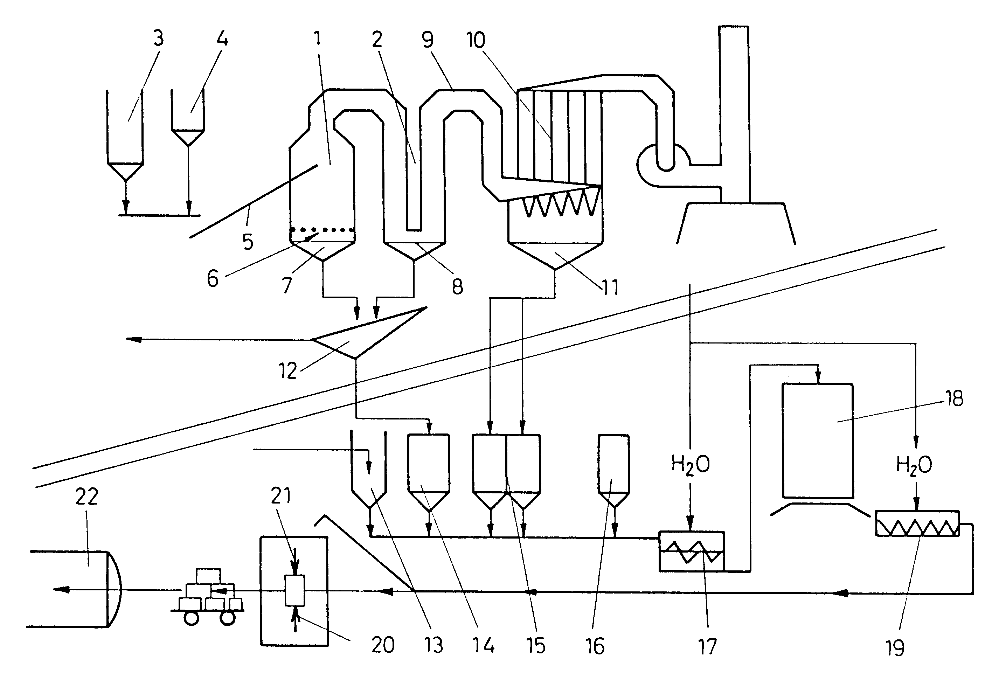

Zur Verdeutlichung des Verfahrens und der Anfallsorte der Aschen und der Ursachen für die aktiven Kalkbestandteile der Reaktionsprodukte in den Rückständen dient die nachfolgende Erläuterung der einzigen Figur sowie die Beispiels-und Versuchsangaben zum erfindungsgemäßen Verfahren.

In der einzigen Figur ist der Wirbelschichtreaktor mit (1) bezeichnet, an den ein Abhitzekessel (2) angeschlossen ist. In der Wirbelschicht werden aus einem Kohlebunker (3) Brennstoff, aus einem Kalkbunker (4) die notwendigen Additive über eine Transporteinrichtung (5) eingebracht. Die für den Betrieb der Wirbelschicht notwendige Luft gelangt über die Leitung (6) in den Wirbelschichtreaktor (1).

Die im Wirbelschichtreaktor (1) anfallende Bettasche wird im Aschebehälter (7) gesammelt und ausgetragen. Die rund 900° C heißen Abgase gelangen in den Abhitzekessel (2), in dessen Kesselboden (8) Kesselasche abgelagert und ebenfalls ausgetragen wird. Die heißen Abgase aus dem Abhitzekessel (2) gelangen über einen Kanal (9) in ein Schlauchfilter (10), in dem die Flugasche (11) abgetrennt wird. Die Aschen werden getrennt abgezogen und im dargestellten Anwendungsfall in zwei Gruppen gebunkert. Die erste Gruppe umfaßt die Filterasche in der Körnung < 1 mm, die zweite Gruppe umfaßt die Kesselasche in der Körnung 1,0 bis 5 mm sowie die abgesiebten Körnungsanteile der Bettasche < 5 mm.

Im allgemeinen erfolgt die Verarbeitung der Aschen beim Verwender, das ist in der Regel ein Kalksandsteinwerk. Dort werden die Aschen in Silos geblasen und bei Bedarf mit Kesselasche in der Körnung 1,0 bis 5 mm bzw. mit Quarzsand in der Körnung 1,0 bis 2,0 mm verfahrensgemäß zusammengestellt und vergleichmäßigt. Von den Bunkern (13, 14, 15) (Quarzsand, Bettasche, Filterasche) sowie aus dem Kalkvorratsbunker (16) gelangen die einzelnen Mischprodukte in den Mischer (17), wo sie gleichmäßig durchmischt und auf eine bestimmte Feuchte eingestellt werden. Von dort erfolgt die Einlagerung in den Reaktor (18), wo die Ablöschung des Kalkes erfolgt. Anschließend wird die Preßfeuchte im Nachmischer (19) korrigiert und das Mischprodukt in der Presse (20) verdichtet, wobei die Verdichtungsgeschwindigkeit durch die Hubgeschwindigkeit des Stempels (21) der Presse (20) je nach Bedarf beeinflußt werden kann.

Die entsprechend vorgeformten und entschalten Vollsteine, Lochsteine oder Wandbausteine werden nach dem Verdichten im Autoklaven (22) weiter behandelt und gehärtet und anschließend auf den Lagerplatz gebracht, von dem sie zu den jeweiligen Verbrauchern gebracht werden können.

## BEISPIEL I

Zur Herstellung von 2 DF- und 3 DF-Vollsteinen, die eine Steinhöhe von 10,8 cm aufweisen, wurden in die Pressen entsprechende Formwerkzeuge eingebaut.

Die Ausgangsmischung hatte folgende Rezeptur:

| | |
|---|---|
| Wirbelschichtasche | 41,2 kg |
| Quarzsand (1,0 bis 2 mm) | 15,8 kg |
| Trockenzuschlag | 57,0 kg |
| Kalkanteil unter Berücksichtigung des Eigenkalkes der Trockenmischung | 3,99 kg |
| Eingestellte Feuchte | 12,5 % |
| Druckaufbau | 119 bis 150 bar |
| Hubgeschwindigkeit | 8,5 sec/Hub |

Die erzeugten Rohlinge ließen sich einwandfrei verpressen und blieben formstabil. Die Steinrohdichte lag bei 1,31 kg/dm$^3$, die mittlere Druckfestigkeit betrug 10,98 N/mm$^2$.

## BEISPIEL II

Bei der Herstellung von Lochsteinen im Format 2 DF wurde eine Mischung aus folgenden Bestandteilen eingesetzt:

| | |
|---|---|
| Wirbelschichtasche | 120 kg |
| Grobsand aus Kesselasche 1,o bis 5 mm | 45 kg |
| Zuschlagsmenge, trocken | 165 kg |
| Kalk unter Berücksichtigung der Eigenkalkmenge der Mischung | 15 kg |
| Eingestellte Feuchte | 12,5 % |
| Hubgeschwindigkeit | 10,5 sec/Hub |

## BEISPIEL IIa

Um die Kapazität der Presse besser auszulasten, wurde versucht, die Hubgeschwindigkeit anzuheben. Es zeigte sich aber, daß trotz des geringen Preßvolumens die Verformungsergebnisse schlechter wurden.

4

Daher wurde die Grundmischung durch eine weitere Zugabe von Kesselasche vergröbert. Drei Anteile der im Beispiel II genannten Ausgangsrezeptur wurden um einen Teil Kesselasche ergänzt. Anschließend wurde der Kalkanteil auf eine Gesamtmenge von 10 % unter Einschluß der Eigenkalkmenge der Flugasche ergänzt und die Preßfeuchte auf 12, 5% eingestellt. Die Verpressung gelangt bei einer Hubgeschwindigkeit von 8,5 sec/Hub.

Im Verlauf von weiteren Versuchen zeigte es sich, daß unter diesen Preßbedingungen, wie sie bei der Verwendung von Natursand gefahren wurden, eine Mischung eingesetzt werden muß, bei der das Mischungsverhältnis der Zuschlagskomponenten Wirbelschichtasche zu Grobsand wie 3 : 2 steht. Im übrigen können die oben beschriebenen Bedingungen eingehalten werden. Das Ergebnis der Mischgutvergröberung bei der auf 8,5 sec/Hub erhöhten Preßgeschwindigkeit war durchaus zufriedenstellend. Die Steine zeigten nicht nur eine einwandfreie Formgebung, sie lösten sich auch problemlos aus den Formwerkzeugen und ließen sich mit den Abtragevorrichtungen ohne Schwierigkeiten auf das Stapelband transportieren und vom Stapel weiter auf die Härtewagen heben.

Daß dieses Fertigungsergebnis bei nahezu üblicher Maschinenleistung erzielt werden kann, darf wohl als eine günstige Voraussetzung für eine betriebliche Anwendung des erfindungsgemäßen Verfahrens gewertet werden. Die bauphysikalischen Mittelwerte dieser Steinserie lagen bei einer Steinrohdichte von 1,1 kg/dm$^3$ und einer Druckfestigkeit von 8,5 N/mm$^2$. Der Vergleich mit der erzielten Druckfestigkeit bei Vollsteinen beweist das außerordentlich gute Ergebnis hinsichtlich des Verhältnisses von Rohdichte zu Belastbarkeit.

die günstigen Ergebnisse bei der Herstellung von Hochlochsteinen im Format 2 DF gaben Veranlassung, mit den entwickelten Verfahrenschritten auch die Herstellung großformatiger Wandbauteile zu testen.

## BEISPIEL III

Bei der Herstellung der großformatigen Wandbausteine in den Abmessungen 50 x 17,5 x 23,8 cm wurde die Mischung des Beispiels IIa eingesetzt und zwar mit:

| Wirbelschichtasche | 120 kg |
| Grobsand aus Kesselasche 1,o bis 5 mm | 80 kg |
| Zuschlagsmenge, trocken | 200 kg |
| Kalk unter Berücksichtigung der Eigenkalkmenge der Mischung | 18,2 kg |
| Eingestellte Feuchte | 12,5 % |
| Hubgeschwindigkeit | 10,5 sec/Hub |

Die Höhe des Formates machte eine weitere Reduzierung der bereits gesenkten Preßgeschwindigkeit von 10,5 auf 15 sec/Hub erforderlich. Die bei der ursprünglichen Geschwindigkeit verpreßten Steine zeigten Fehlstellen im Steindeckel, die durch die explosionsartig entweichende komprimierte Luft abgesprengt wurden. Bei Reduzierung der Preßgeschwindigkeit auf die bereits genannten 15 sec/Hub waren die erzeugten Rohlinge absolut standfest und kantenscharf. Sie ließen sich einwandfrei durch die automatischen Abtragevorrichtungen händeln und transportieren und überstanden den Härteprozeß mängelfrei.

Bei einem äußeren Steinvolumen von 20,825 dm$^3$ wurde die Steinrohdichte von rund 1,0 kg/dm$^3$ festgestellt. Durch die Verwendung der beschriebenen leichten Zuschläge war es gelungen, das Gesamtgewicht des Wandbauteils auf 21 kg zu verringern. Trotz der niedrigen Steinrohdichte betrug die Druckfestigkeit des Steins i.M. 12 N/mm$^2$ und lag damit in einem günstigen Verwendungsbereich.

Bei weitergehenden Versuchen, mit den die Reduzierung der Preßgeschwindigkeit getestet werden sollte, wurde gefunden, daß die Erhöhung der Preßfrequenz auf 10 sec/Hub möglich ist, wenn die Mischungsanteile 40 % Wirbelschichtfilterasche und 60 % Grobsand in Form von Kesselasche der Körnung 1,0 bis 5 mm betragen.

Es kann aber nicht das Ziel des erfindungsgemäßen Verfahrens sein, durch eine fortschreitende Reduzierung der Filteraschenanteile die Herstellungsbedingungen zu vereinfachen. Es war vielmehr das Ziel, möglichst hohe Anteile an mehlkornfeinen Körnungen, bei den bodenmechanische Durchlässigkeitswerte $k_f$ zwischen 3,5 und 4,2 x 10$^{-7}$ m/sec gemessen wurden, in Verwendungsbereichen einsatzfähig zu machen, in denen der enthaltene Kalkanteil einschließlich seiner Reaktionsprodukte die Verwendung nicht stört, sondern im Gegenteil durch Kalkeinsparung begünstigt. In diesem Sinne ist der Hinweis darauf wichtig, daß es nicht nur gelang, hohe Anteile der Wirbelschichtfilterasche zu den beschriebenen Rahmenbedingungen in den Prozeß einzubeziehen, sondern daß es besonders überraschend war, mittels der hydrothermalen Härtung die weit auseinanderliegenden Abbindezeiten von Kalk und aktiviertem Anhydrit zeitlich so zusammenzufassen, daß eine wechselseitige Beeinträchtigung und spätere Nachreaktion (Quellvorgang) unterbleiben.

**Patentansprüche**

1. Verfahren zur Herstellung wärmedämmender Voll- und Lochsteine niedriger Rohdichte aus Rückständen aus Wirbelschichtfeuerungsanlagen, die mit ballasthaltigen Steinkohlen betrieben werden, wobei die Wirbelschichtfeuerungsasche mit Kesselasche und Kalkhydrat unter Wasserzugabe gemischt und dann zu Steinen geformt und gepreßt wird, um dann gehärtet zu werden,
**dadurch gekennzeichnet,**
daß die Wirbelschichtfilterasche < 1,0 mm zur Verhinderung des Einschlusses von komprimierter Luft beim nachfolgenden Pressen mit Grobsand der Bett- und Kesselasche 1,0 bis 5 mm aus diesen Wirbelschichtanlagen oder gleichdichter Mineralstoffe gleichen Kornbandes, unter Zugabe von Kalkhydrat unter Einbeziehung des aktiven Kalkgehaltes der Aschen auf einen Gesamtbinde- bzw. Reaktionsmittelanteil von ca. 10 Gew.-% gebracht und bei Einstellung einer Feuchte von 11 bis 14 % gemischt, vergleichmäßigt und dann unter Entlüftung des Gemisches zu Voll- und/oder Lochsteinen oder Wandbausteinen verdichtet und anschließend bei ca. 180° C über einen Zeitraum von 4 Stunden gehärtet wird, wobei die Aufheizung des Druckkessels über 2 Stunden erstreckt und der Druckabbau ebenfalls auf 2 Stunden ausgedehnt wird.

2. Verfahren nach Anspruch 1,
**dadurch gekennzeichnet,**
daß die Trockenmischung aus 60 bis 70 % Wirbelschichtfilterasche und 30 bis 40 % Grobsand hergestellt wird, der anschließend der an 10 Gew.-% fehlende aktive Kalk in Form von CaO oder Ca-$(OH)^2$ zugefügt und auf 12,5 % Feuchte eingestellt wird.

3. Verfahren nach Anspruch 1,
**dadurch gekennzeichnet,**
daß der Druckaufbau beim Härten zwischen 110 und 150 bar eingestellt wird.

4. Verfahren nach Anspruch 1,
**dadurch gekennzeichnet,**
daß der Anteil des Grobsandes der Bett- und Kesselasche ganz oder teilweise durch Kraftwerksasche der Körnung 1,0 bis 5 mm ersetzt wird.

5. Verfahren nach Anspruch 1,
**dadurch gekennzeichnet,**
daß der Anteil Grobsand der Bett- und Kesselasche durch Natursand 1,0 bis 2 mm ganz oder teilweise ersetzt wird.

6. Verfahren nach Anspruch 1,
**dadurch gekennzeichnet,**
daß die Preßgeschwindigkeit mit zunehmender Vergröberung des Zuschlages gesteigert wird.

7. Verfahren nach Anspruch 4 oder Anspruch 5,
**dadurch gekennzeichnet,**
daß Wirbelschichtfilterasche und Grobsand im Verhältnis 3 : 2 eingesetzt werden.

8. Verfahren nach Anspruch 1 bis Anspruch 7,
**dadurch gekennzeichnet,**
daß die Preßgeschwindigkeit von 8,5 auf bis zu 15 sec/Hub angepaßt wird.

9. Verfahren nach Anspruch 8,
**dadurch gekennzeichnet,**
daß eine Reduzierung der Preßgeschwindigkeit mit zunehmendem Steinformat, vorzugsweise auf 12 bis 15 sec/Hub erfolgt.

**Claims**

6

1. A method of producing heat insulating solid and perforated blocks of low crude density from residues from fluidised bed firing systems which are operated with inerts-containing hard coal, the fluidised bed firing ash being mixed with boiler ash and calcium hydroxide, with the addition of water and then shaped and pressed into blocks to be hardened, characterised in that the fluidised bed filter ash is less than 1 mm granular size to prevent the inclusion of compressed air during subsequent pressing together with coarse sand and the bed and boiler ash of 1 to 5 mm from these fluidised bed installations, or equally dense mineral substances of the same granular range, with the addition of calcium hydroxide to bring the active lime content of the ash to a total proportion of binder or reactive agent of approx. 10% by weight, the moisture content being adjusted to 11 to 14% whereupon the batch is mixed, homogenised and then, with the exclusion of air, compressed to form solid and/or perforated blocks or wall blocks and then hardened at approx. 180°C over a period of 4 hours, the heating up of the pressure vessel extending over 2 hours and the pressure abatement likewise being extended over 2 hours.

2. A method according to Claim 1, characterised in that the dry mixture is made up of 60 to 70% fluidised bed filter ash and 50 to 40% coarse sand, the active lime lacking to produce 10% by weight being added in the form of CaO or Ca(OH)$_2$, a moisture content of 12.5% being adjusted.

3. A method according to Claim 1, characterised in that the pressure build-up during hardening is adjusted to between 110 and 150 bars.

4. A method according to Claim 1, characterised in that the proportion of coarse sand in the bed and boiler ash is partially or entirely replaced by power station ash having a granular size of 1 to 5 mm.

5. A method according to Claim 1, characterised in that the proportion of coarse sand in the bed and boiler ash is wholly or partially replaced by natural sand of 1 to 2 mm.

6. A method according to Claim 1, characterised in that the pressing rate is increased with increasing coarseness of the additives.

7. A method according to Claim 4 or Claim 5, characterised in that fluidised bed ash and coarse sand are used in a proportion of 3:2.

8. A method according to Claim 1 to Claim 7, characterised in that the pressing rate is adapted from 8.5 up to 15 secs/stroke.

9. A method according to Claim 8, characterised in that the pressing speed is reduced as the block format increases, preferably to 12 to 15 secs/stroke.

**Revendications**

1. Procédé pour la fabrication de briques pleines et creuses calorifuges de faible masse volumique apparente en rejets d'installations de chauffe à lit fluidisé qui sont exploitées avec du charbon de terre contenant des inertes, les cendres de l'installation de chauffe à lit fluidisé étant mélangées à des cendres de chaudière et à de l'hydrate de chaux et ensuite mises sous forme de briques et comprimées, pour être ensuite durcies,
caractérisé en ce que les cendres de filtration de lit fluidisé <1,0 mm, pour empêcher l'inclusion d'air comprimé lors de la compression suivante, sont amenées avec du sable grossier des cendres de lit et de chaudière de 1,0 à 5 mm provenant de ces installations à lit fluidisé ou avec des matières minérales de même densité dans la même plage granulométrique, avec addition d'hydrate de chaux à une proportion de liaison d'ensemble ou de réactant d'environ 10 % en poids, et sont mélangées en réglant une humidité de 11 à 14 %, sont homogénéisées et ensuite, avec aération du mélange, sont comprimées sous forme de briques pleines et/ou creuses ou de briques à parois et ensuite durcies a environ 180°C en un temps de 4 heures, le chauffage du réservoir de pression s'étendant sur 2 heures et la baisse de pression étant également étendue sur 2 heures.

2. Procédé selon la revendication 1

caractérisé en ce que le mélange sec est fabriqué à partir de 60 à 70% de cendres de filtration de lit fluidisé et 30 à 40 % de sable grossier, auquel sont ajoutés les 10 % en poids manquants de chaux active sous forme de Ca O ou Ca (OH)$^2$ et on règle à une humidité de 12,5 %.

3. Procédé selon la revendication 1,
caractérisé en ce que la formation de pression lors du durcissement est réglée entre 110 et 150 bars.

4. Procédé selon la revendication 1,
caractérisé en ce que la partie du sable grossier dans les cendres de lit et de chaudière est remplacée totalement ou partiellement par des cendres de centrale électrique d'une granulométrie de 1,0 à 5 mm.

5. Procédé selon la revendication 1,
caractérisé en ce que la partie du sable grossier dans les cendres de lit et de chaudière est remplacée totalement ou partiellement par du sable naturel de 1,0 à 2 mm.

6. Procédé selon la revendication 1,
caractérisé en ce que la vitesse de compression est augmentée pour une granulométrie croissante de l'additif.

7. Procédé selon la revendication 4 ou la revendication 5,
caractérisé en ce qu'on met en oeuvre des cendres de filtration de lit fluidisé et du sable grossier en proportion de 3:2.

8. Procédé selon la revendication 1 jusqu'à la revendication 7,
caractérisé en ce que la vitesse de compression est ajustée à 8,5 jusqu'à 15 s/coup.

9. Procédé selon la revendication 8,
caractérisé en ce qu'une réduction de la vitesse de compression, de préférence à 12 à 15 s/coup, est produite pour un format de brique croissant.